# EUROPEAN PATENT SPECIFICATION

(11) **EP 2 238 368 B1**
(45) Date of publication and mention of the grant of the patent: **28.09.2011**
(21) Application number: 08869294.2
(22) Date of filing: 30.12.2008
(51) Int. Cl.: F16G 1/28

(54) **COGGED BELT**
ZAHNRIEMENS
COURROIE CRANTÉE

(30) Priority: 03.01.2008 IT BO20080003
(43) Date of publication of application: 13.10.2010
(73) Proprietor: P.r. Nastri Trasportatori S.n.c. Di Rubino Vincenzo&Rubino Attilio, 40011 Anzola Emilia (BO) (IT)
(72) Inventor: RUBINO, Attilio, I-40011 Anzola Emilia (BO) (IT); VINCENZI, Maurizio, I-41010 Cognento (Modena) (IT)
(74) Representative: Dall'Olio, Giancarlo
(86) International application number: PCT/IB2008/003652
(87) International publication number: WO 2009/087468

(56) References cited:
- DE-A1- 1 531 867
- DE-A1- 3 510 740
- FR-A- 999 236
- GB-A- 2 116 287
- US-A- 4 283 184

## Description

### TECHNICAL FIELD

The present invention relates to the technical sector of cogged belts or belts with a cogged guide of organs for transmission of drive or conveyor organs, destined to guide and/or for application to synchronous/asynchronous conveying of articles. In particular, the invention relates to a cogged belt according to claim 1.

### BACKGROUND ART

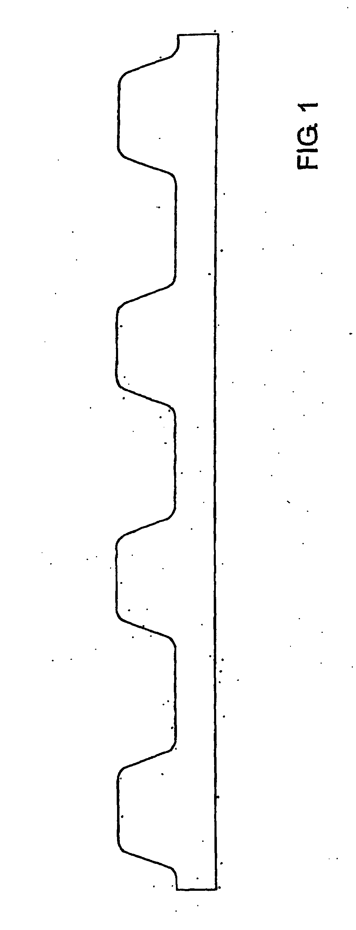

Cogged belts (see the example of figure 1, in which a length of a cogged belt is illustrated) can be made of a thermoplastic and be used for enmeshing with corresponding cogged pulleys in drive transmission and/or in synchronous/asynchronous transport of articles.

Cogged-guide belts are also used in drive transmissions or for conveying articles, and comprise a base belt to which are applied, for example on a side thereof, one or more longitudinal cogged guides, parallel to one another and of a limited width; in particular, cogged guides can be cogged belts applied by gluing, heat-welding or high-frequency welding to a base belt, which are destined to engage in corresponding circular channels afforded in the relative winding pulleys of the belt; the cogged channels are hollow or cogged respectively for asynchronous or synchronous applications (the pulley is destined to enmesh with the belt) of drive transmission or conveying of articles; in both cases, however, the cogged belts have a self-centring effect and, therefore, act as guides for the corresponding belt with respect to the pulleys the belt is wound upon.

A type of belt having one or more cogged guides is known from Italian patent application no. BO2007A000275, owned by the present applicant; each cogged guide of this specific belt comprises a succession of belts that are reciprocally separated from one another and applied by fusion to the base belt, for synchronisation and self-centring applications; the fact that each cog applied to the base belt is directly separate from the adjacent one in the succession gives the cogged guide belt an overall greater flexibility with respect to known technical solutions at the moment of filing of the above application (i.e. the technical solutions referred-to above).

FR 999236 discloses a cogged belt according to the preamble of claim 1.

In this technical sector, however, there emerges a need to give greater flexibility to the cogged belt and to belts with a cogged guide or in any case having a cogged profile, for example in order to enable use of smaller-diameter pulleys with the general aim of containing masses and costs of the drive transmission organs and conveying of articles, without this compromising the technical-functional characteristics of the cogged belts and the above-mentioned belts with cogged guides.

### DISCLOSURE OF INVENTION

In the light of the above, an aim of the present invention is to provide a new type of cogged belt which is able to give the belts a greater flexibility with respect to known-type solutions, without this prejudicing the relative technical-functional characteristics of resistance, reliability and working life. A further aim is to provide a technical solution the costs of which, either directly or indirectly connected to its implementation, are relatively contained in relation to the advantages provided.

An embodiment of the present invention consists also in providing a cogged belt as described in claim 1, such that the belt takes on overall a greater flexibility with respect to known-type solutions, without this compromising the relative technical-functional characteristics of resistance, reliability and working life. Further provided is a belt with a cogged belt, the costs of which, directly or indirectly connected with its implementation, are relatively contained in relation to the advantages provided.

The above-mentioned aims of obtained by: a new type of cogged according to claim 1.

### BRIEF DESCRIPTION OF THE DRAWINGS

The characteristics of the invention which do not emerge from what is set out above will better emerge from the following, in agreement with what is stated in the claims and with the help of the accompanying figures of the drawings, in which:
figure 1 is a lateral view of a length of cogged belt of known type;
figure 2 is a lateral view of a length of cogged belt according to the invention;
figure 3 is a lateral view of a different cogged belt
figure 4 is a perspective view, in a different scale to the preceding figures', of a belt with a cogged guide, comprising a cogged belt of the invention;
figure 5 is a lateral view of the belt of figure 4;
figure 6 is a lateral view of another belt,
figure 7 is a perspective view, in the same scale as in figure 4, of a further belt with a cogged guide comprising only cogs;
figure 8 is a lateral view of the belt of figure 7;
figure 9 is a lateral view of a belt such as the one in figure 7, in which the fissures fashioned in the cogs have a greater depth.

### BEST MODE FOR CARRYING OUT THE INVENTION

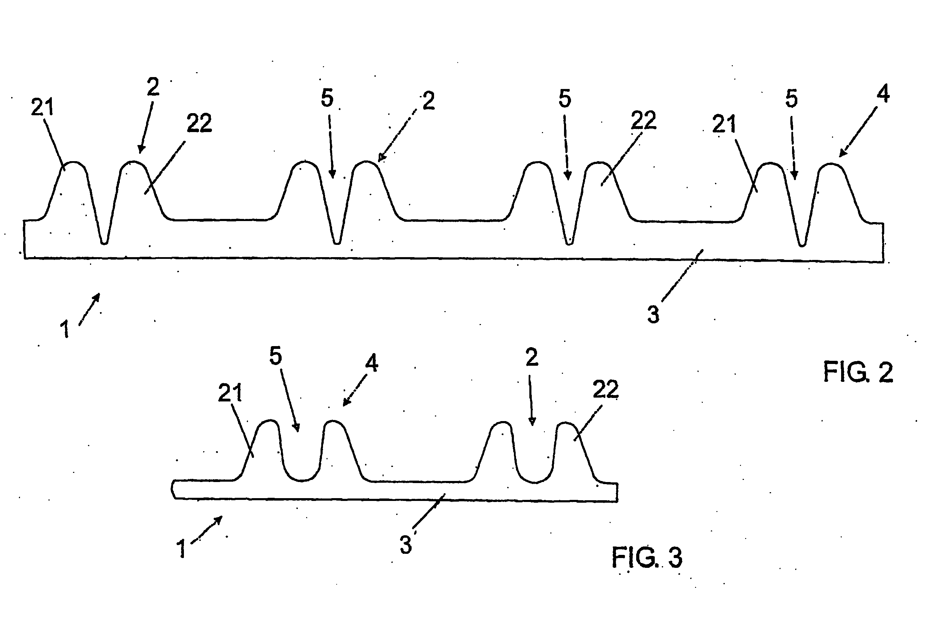

With reference to figures 2 and 1 denotes in its entirety a cogged belt according to the present invention; the cogged belt 1 comprises a base 3 of a given thickness which enables a reciprocal connection of the cogs 2.

Each cog 2 affords, fashioned in the relative central region 4 thereof, a fissure 5 having predetermined dimensions and conformation, which originates at the top of the cogs 2, and develops internally thereof; in particular, the fissure 5 has a V-shape and extends for the whole width of the cog 2, in a transversal direction to the development of the cogged belt 1, and has a depth which is given by the sum of the height of the cog 2 and a part of the thickness of the base 3.

In the cogged belt illustrated in figure 3, the fissure 5 is U-shaped and extends over the whole width of the cog 2 in a transversal direction to the development of the cogged belt 1 and has a depth which is substantially equal to the height of the cog 2.

By effect of the fissure 5, which involves each cog 2, two lateral sections 21, 22 comprising respectively the flanks of the cog 2 are defined.

The presence of the fissures 5 in the central region 4 of the cog 2 does not influence the functionality thereof, so that the cog 2 can couple well with the corresponding cogs of a cogged pulley (not illustrated).

The fissures could have different conformations and depths (for example extending only to 70% of the height of the relative cog).

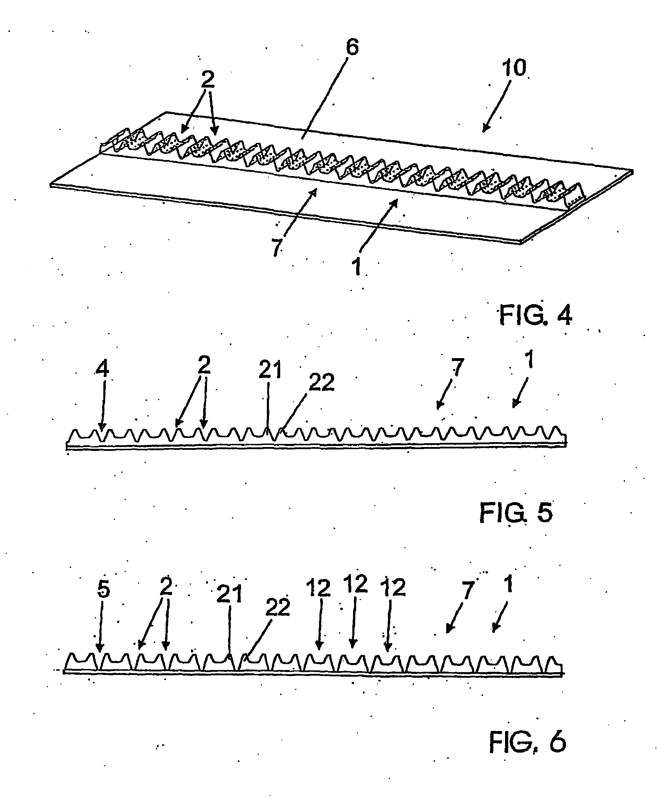

In addition, with the present invention a new type of belt is defined, with a cogged belt of the invention, in agreement with what is illustrated in figures from 4 to 5: the belt with the cogged guide 10 comprises a base belt 6 to which a cogged guide 7 is applied for example by fusion, which cogged guide 7 can be a cogged belt 1 (substantially of the same type as the cogged belt illustrated in figure 2), see figures 4 to 5, i.e. can be a succession 11 of cogs 2 which are reciprocally separated from one another, see figures 6 to 9.

Figure 5 is a lateral view of the belt with the cogged guide 10 shown in figure 4. In the example one only cogged guide 7 is shown (but in general they can be a plurality) which is constituted by the cogged belt 1 comprising, for example, only cogs 2 and by a base 3 for reciprocally connecting the cogs 2. Each cog 2 affords a fissure 5 in a relative central region 4 thereof, the fissure 5 having predefined dimensions and conformation and originating at the top of the cog 2 itself, developing internalwise thereof. In particular, the fissure 5 is V-shaped, extends for the whole width of the cog 2 in a transversal direction to the development of the cogged belt 1 and has a depth which is given by the sum of the height of the cog 2 and part of the thickness of the base 3.

Figure 6 is a lateral view of a belt with a cogged guide 10 of the type shown in figure 4, in which the fissures 5 exhibit a depth which is equal to the sum of the height of the cog 2 and the thickness of the base 3, thus reaching the base belt 6. In this way, the cogged guide 7 applied to the base belt 6 comprises a succession of elements 12 separated one from another, each of which comprises two sections 22, 21 of adjacent cogs 2 in reciprocal communication via the corresponding base portion 3 delimited between the fissures 5 of the adjacent cogs 2. The result obtained is a belt with a cogged guide 10 which comprises a succession of elements 12 separated from one another and applied on the base belt 6, which elements together define a same number of cogs 2 which are able to couple with a pulley having a cogged channel (not illustrated) for example for applications of a synchronised type. A belt with a cogged guide 10 of this type exhibits a considerable flexibility thanks to the mutual separation of the elements 12 which functionally constitute the cogged guide 7.

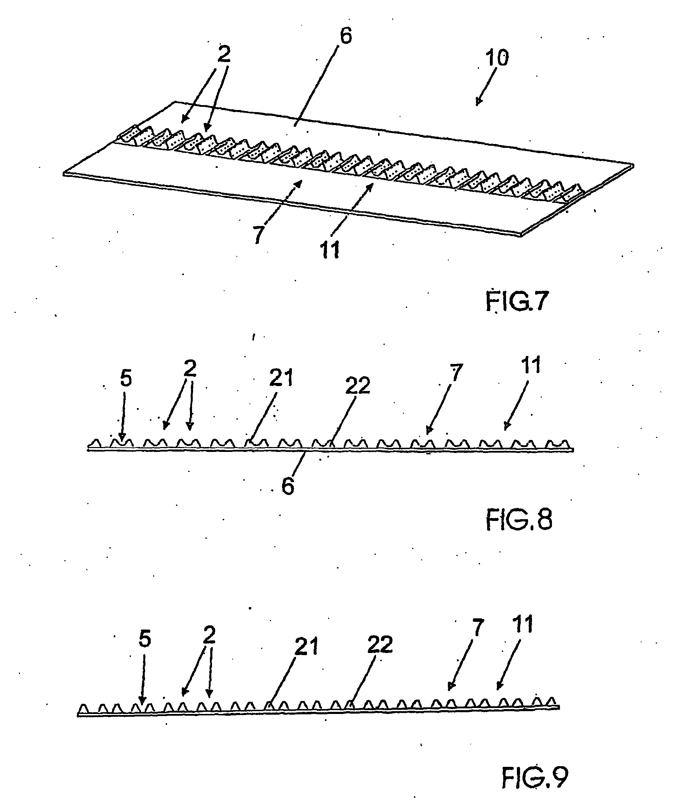

Figure 8 is a lateral view of a belt with a cogged guide 10 shown in figure 7; also in this example a single cogged guide 7 is shown which is constituted by a succession 11 of cogs 2 which are separated from one another (in this case a reciprocal connection base for the cogs is missing). Each cog 2 exhibits, formed in a central region 4 thereof, a fissure 5 of predetermined size and conformation, which originates in the top of the cog 2 and develops internally thereof; by way of example, the fissure 5 has a V-shape, extends over the whole width of the cog 2 in a transversal direction to the development of the succession 11 of cogs 2 and is of such a depth that for example it is greater than 70% of the height of the cog 2.

Figure 9 is a lateral view of a belt with a cogged guide 10 of the type shown in figure 7, in which the fissures 5 are as deep as the height of the cog 2 and for this reason reach the base belt 6. In this way, a belt with cogged guide 10 of this type exhibits a still greater flexibility with respect to the solution of figure 8, as each cog 2 is "divided" in half into two lateral portions 21, 22, reciprocally separated.

It is specified that a cogged belt or a cogged guide belt can exhibit totally (see figures from 2 to 9) or partially (a solution not illustrated in the figures of the drawings) the cogs 2 of the described type; where a cog like the one used in the invention is used, at least locally, greater characteristics of flexibility of the cogged belt or the belt with the cogged guide have been found, with respect to known-type solution. By way of example, the fact of including a regular pattern (i.e. one cog with the fissure 5 every one, two or more cogs in the prior art) or a total implementation of the cogs like the ones used in invention in a cogged belt or a belt with a cogged guide has been shown to provide a homogeneous and optimal increase of the flexibility of the cogged belt or belt with cogged guide.

The advantage of the present invention consists in having defined a new cogged belt which is able to give the belts a greater flexibility with respect to the solutions of known type, without this compromising the relative technical-functional resistance characteristics, as well as reliability and working life. In agreement with the prefixed aims, the costs too, directly or indirectly connected to the implementation of the present technical solution, are seen to be relatively contained in relation to the advantages provided.

The greater flexibility of the cogged belts of the invention enables an advantageous considerable reduction, with respect to the known-type solutions, of the diameters of the winding pulleys, with all the positive implications this involves, i.e. a reduction in weights, sizes and therefore also costs of the corresponding conveyor or drive transmission organ used by the cogged belts or belts with cogged guide.

A further advantage of the present invention consists in the fact that the presence of the fissure 5 in the cogs 2 does not enable industrial dusts, for example abrasive powders, to become compacted in the corresponding spaces of the cogged pulleys, i.e. the pulleys having cogged channellings (in the case of asynchronous/synchronous self-centring) with which the cogs 2 couple to and progressively damage the pulleys, differently to what exists in the prior art. With the present invention, the abrasive powders collect in the fissure 5 of the cog 2 and are expelled automatically by force of gravity during the movement of the corresponding cogged belt or belt with a cogged guide.

A further advantage of the present invention consists in having defined a new type of belt according to claim 5 , in this way, the belt takes on overall a greater flexibility with respect to the solutions of known type, without this compromising the relatively technical-functional qualities of resistance, reliability and working life. Also, the costs, directly or indirectly connected to the implementation of the belt with cogged guide, are relatively contained in relation to the advantages provided thereby.

Experts in the sector will note that the creation of fissures in the cogs of a cogged belt of the present invention is easy to perform using means and techniques which are substantially of known type.

In agreement with the contents of the claims, the ambit of protection sought for the present invention is defined. It is however possible to use the type of cogs like the ones used in the invention for example with cogged belts in which metal reinforcement elements are sunk.

The above is described by way of non-limiting example, such that any variants of a practical-applicational nature are understood to fall within the ambit of protection of the invention as defined in the following claims.

## Claims

1. A cogged belt for conveyor organs or for transmission of drive, comprising cogs which in a central region (4) thereof afford a fissure (5) of predetermined dimensions and conformation, solely destined to at least locally increase a degree of flexibility of the cogged belt (1) , wherein the cogged belt (1) comprises a base (3) of a given thickness, for reciprocally connecting up the cogs (2), **characterised in that** the fissure (5) made in the cog (2) has a depth which is given by a sum of a height of the cog (2) and at least a part of a thickness of the base (3).

2. A cogged belt of claim 1, **characterised in that** the fissure (5) extends over a whole width of the cog (2) in a transversal direction to a development of the cogged belt (1) or belt with a cogged profile.

3. A cogged belt of claim 1 or 2, **characterised in that** the fissure (5) is substantially V-shaped.

4. A cogged belt of claim of 1 or 2. **characterised in that** the fissure (5) is substantially U-shaped.

5. A belt comprising a base belt (6) on which a cogged belt according to one of claims from 1 to 4 is applied.

6. A belt according to claim 5, **characterised in that** the cogged belt is used for centring the belt on an organ with which the belt couples and/or for reasons connected with synchronised advancement.

## Patentansprüche

1. Zahnriemen für Förderorgane oder zur Antriebsübertragung, welcher Zähne beinhaltet, die an ihrem mittleren Abschnitt (4) einen Spalt (5) vorbestimmter Größe und Form aufweisen, der allein dazu dient, zumindest örtlich den Flexibilitätsgrad des Zahnriemens (1) zu erhöhen, worin der Zahnriemen (1) einen Grundkörper (3) vorgegebener Dicke zur wechselseitigen Verbindung mit den Zähnen (2) beinhaltet, **dadurch gekennzeichnet, dass** der in dem Zahn (2) angefertigte Spalt (5) eine Tiefe aufweist, die sich aus der Summe einer Höhe des Zahnes (2) und zumindest einem Teil der Dicke des Grundkörpers (3) ergibt.

2. Zahnriemen nach Anspruch 1, **dadurch gekennzeichnet, dass** sich der Spalt (5) über eine Gesamtbreite des Zahns (2) quer zur Längsrichtung des Zahnriemens (1) oder Gurtbandes mit Zahnprofil erstreckt.

3. Zahnriemen nach Anspruch 1 oder 2, **dadurch gekennzeichnet, dass** der Spalt (5) im Wesentlichen V-förmig ist.

4. Zahnriemen nach Anspruch 1 oder 2, **dadurch gekennzeichnet, dass** der Spalt (5) im Wesentlichen U-förmig ist.

5. Gurtband, das einen Grundriemen (6) beinhaltet, auf dem ein Zahnriemen nach einem der Ansprüche von 1 bis 4 aufgebracht ist.

6. Gurtband nach Anspruch 5, **dadurch gekennzeichnet, dass** der Zahnriemen zum Zentrieren des Gurtbandes auf einem mit dem Gurtband gekoppelten Organ und/oder zum synchronisierten Vorschub im Zusammenhang mit Förderaufgaben dient.

## Revendications

1. Une courroie crantée pour des organes de transport ou pour la transmission de mouvement, comprenant des crans qui dans une zone centrale (4) de ceux-ci présentent une fente (5) de dimensions et de conformation prédéfinies, uniquement destinée à augmenter au moins localement un degré de flexibilité de la courroie crantée (1), où ladite courroie crantée (1) comprend une base (3) d'une épaisseur donnée, servant à raccorder réciproquement les crans (2), **caractérisée en ce que** la fente (5) réalisée dans le cran (2) a une profondeur qui est donnée par la somme d'une hauteur du cran (2) et d'au moins une partie d'une épaisseur de la base (3).

2. La courroie crantée selon la revendication 1, **caractérisée en ce que** la fente (5) s'étend sur toute une largeur du cran (2) dans une direction transversale au développement de la courroie crantée (1) ou courroie à profil cranté.

3. La courroie crantée selon la revendication 1 ou 2, **caractérisée en ce que** la fente (5) a essentiellement la forme d'un « V ».

4. La courroie crantée selon la revendication 1 ou 2, **caractérisée en ce que** la fente (5) a essentiellement la forme d'un « U ».

5. Une courroie comprenant une courroie de base (6) sur laquelle une courroie crantée selon une des revendications de 1 à 4 est appliquée.

6. La courroie selon la revendication 5, **caractérisée en ce que** la courroie crantée est utilisée pour centrer la courroie sur un organe avec lequel ladite courroie est accouplée et/ou pour des raisons liées à une avance régulière.
